# EUROPEAN PATENT APPLICATION

(11) **EP 3 594 883 A1**
(43) Date of publication of application: **15.01.2020**
(21) Application number: 18182587.8
(22) Date of filing: 10.07.2018
(51) Int. Cl.: G06Q 20/38, G06Q 30/06, G06Q 30/02

(54) **SYSTEM AND METHOD FOR DIGITAL PASS TRANSACTIONS**

(71) Applicant: Your Pass s.r.o., 14900 Praha - Chodov (CZ)
(72) Inventor: Tichopad, Ales, 25228 Cernosice (CZ); Rajnoch, Daniel, 25228 Cernosice (CZ)
(74) Representative: Hartvichova, Katerina

(57) **Abstract**

The present invention provides a system for digital pass transactions which contains at least
- a promoter equipped with technical means to request from a creator a digital pass data package creation and a digital pass identification information generation, and with technical means to promote a unique URL assigned to the digital pass for retrieval of the digital pass and of further content to be displayed in the digital pass by a mobile device of a user,
- a creator which is a server or web-based service for creating a digital pass data package and for creating a further content data package; wherein the creator is equipped with technical means to send the unique URL assigned to the digital pass to the promoter;
- a trigger for triggering the automatic provision of the further content to the unique URL assigned to the digital pass after the triggering event occurs,
- a driver equipped with technical means for providing the creator with the further content to be displayed in the digital pass when triggered by the trigger, and for requesting the creator to create a further content data package and upload it to the unique URL assigned to the digital pass,
- whereas the creator or the promoter or the driver are adapted to challenge the mobile device to re-load the further content data package from the unique URL assigned to the digital pass at least on every update of the unique URL assigned to the digital pass with the further content data package.

The invention further provides a method using the said system for digital pass transactions.

## Description

### Field of the Invention

The present invention relates to a field of digital pass transaction systems.

### Background Art

Passes, such as tickets, visitors' cards, etc. have been traditionally issued to certify rights to enter a place such as a museum, a sports event, a cultural event or a public transport. The traditional form of passes is the one using paper with a printed content. With advancing digitalization, passes are increasingly often issued and distributed by means of digital media and stored within digital devices such as mobile phones. This form of passes typically utilizes an identification code such as a bar code or a quick response (QR) code whereas the pass can be displayed on the screen of a portable digital device such as a mobile phone, and hence does not have to be printed. Unlike printed passes, some types of passes in the form of a digital medium may serve as gateways to further information relevant to the place or event, or to advertisements. However, they require an action from the user to access the information such as exchanging the card or reloading the card actively, or they can only display one fixed pre-defined piece of information.

It is now desirable to provide a pre-defined information or a sequence of information to the user in an automated way (without the need for human interference), based on a predefined triggering event.

### Summary of the Invention

The present invention relates to a system and method for digital pass transactions which allow remote control of the digital pass by the system and provision of further content in an automated way without the requirement for any activity of the user and without the need for a person deciding on or forwarding further content to specific digital passes, and which allows for triggering the provision of content based on a triggering event such as a validation of the digital pass or its occurring at a certain location.

The systems contains at least:
- a promoter equipped with technical means to request from a creator a digital pass data package creation and a digital pass identification information generation, and with technical means to promote a unique URL assigned to the digital pass for retrieval of the digital pass and of further content to be displayed in the digital pass by a mobile device of a user,
- a creator which is a server or web-based service for creating a digital pass data package and for creating a further content data package; wherein the creator is equipped with technical means to send the unique URL assigned to the digital pass to the promoter;
- a trigger for triggering the automatic provision of the further content to the unique URL assigned to the digital pass after the triggering event occurs,
- a driver equipped with technical means for providing the creator with the further content to be displayed in the digital pass when triggered by the trigger, and for requesting the creator to create a further content data package and upload it to the unique URL assigned to the digital pass,
- whereas the creator and/or the promoter and/or the driver are adapted to challenge the mobile device to re-load the further content data package from the unique URL assigned to the digital pass at least on every update of the unique URL assigned to the digital pass with the further content data package.

The promoter, the trigger, the driver and the creator may be separate components or separate computer programs or separate computer program modules, or may be integrated into one to three components, e.g., processors, servers and/or computer programs.

The method for digital pass transactions according to the present invention comprises at least the following steps:
- a promoter sends a request to a creator to create a digital pass data package;
- the creator creates a digital pass data package and generates a digital pass identification information and a unique URL assigned to the digital pass,
- the creator sends at least the unique URL assigned to the digital pass to the promoter; in some embodiments, the creator may send to the promoter the unique URL assigned to the digital pass and at least one of the digital pass data package and the digital pass identification information;
- the promoter provides the unique URL assigned to the digital pass and/or the digital pass data package to a mobile device of the user; the mobile device downloads the digital pass data package from the unique URL assigned to the digital pass or from the message from the promoter;
- after a triggering event occurs, the trigger triggers the automatic provision by a driver of the further content to the unique URL assigned to the digital pass;
- after being triggered by the trigger, the driver sends a pre-defined further content to the creator in at least one pre-defined time interval, and for each further content the driver requests the creator to create the further content data package,
- the creator upon the request from the driver and upon provision of the further content by the driver creates the further content data package and uploads it to the specific URL of the digital pass,
- the creator, the driver or the promoter challenge the mobile device to re-load the URL, thus uploading the further content data package.

### Detailed description of the Invention

The following terms have the meaning and preferred embodiments as described herein below within the context of the present invention:
A "digital pass" is a digital information created in the system and method of the present invention, typically by the creator. The digital pass confirms the right of the user to access a certain location or event or the membership of the user in a group of persons (e.g, loyalty programme), physically or electronically. The digital pass data are typically saved in the mobile device of the user. The digital pass data may be saved in any suitable mobile application, for example in a mobile application specially designed for the system and method of the present invention or in a mobile wallet application.

In one embodiment, the digital pass may be presented to the user in the mobile application in the form of a card with a textual and graphical content.

One embodiment of the digital pass is a .pkpass file, which is a format developed by Apple Inc. to easily develop and distribute passes.

A "digital pass data package" is a digital file containing the information to be represented on the screen of the mobile device as a visual representation of the digital pass. It is typically a .zip file containing the information for the digital pass to be represented for the user (such as images, user data, data of the event or location, data of the membership programme, rights allocated to the user, further relevant information, etc.). The digital pass data package is typically downloaded by the mobile device from the URL provided to the mobile device by the promoter. Alternatively, the digital pass data package can be downloaded by the mobile device from the message by which the promoter promotes the URL to the mobile device, e.g., from an attachment to the message. The digital pass data package typically contains the digital pass identification information.

A "further content" is a pre-defined content to be provided to the user after the triggering event occurs. The pre-defined further content is stored in the memory of the driver, together with the definition of the triggering event or a sequence of triggering events which shall trigger the provision of the further content, and optionally together with the information about time delay from the triggering event(s) after which the further content shall be provided. The further content to be provided may be provided in a single step (one change of the content of the digital pass) or in multiple steps (several changes of the content of the digital pass). The further content may be provided immediately after the triggering event occurs or after a pre-defined delay. If the further content is provided in multiple steps, the individual contents (steps) are provided within pre-defined delays from the triggering event, or based on a series of triggering events. Even if only a part of the content of the card is to be replaced, the whole content of the card is created a-new and downloaded and represented.

The further content is an information which is destined to the user after the triggering event has occurred. The further content may include, for example, an information relevant to the location or event, such as a map or a programme, updates on the location or the programme, or safety information, marketing information, a voucher, a promotional leaflet, a discount voucher or an information card.

A "further content data package" is a digital file containing the further information to be represented on the screen of the mobile device. The further content data package is typically a .zip file. Even if only a part of the content of the digital pass is to be replaced, the further content data package containing the whole content of the digital pass is created a-new, uploaded by the creator on the unique URL assigned to the digital pass, downloaded from the unique URL assigned to the digital pass by the mobile device and represented on the screen of the mobile device.

The data packages are typically zipped, and they may additionally or alternatively be encrypted.

A "mobile device" is a device capable of accessing the unique URL assigned to the digital pass, downloading the digital pass data package and the further content data package(s) and representing the digital pass data or the further content data on the screen. Such mobile devices may include a mobile phone, a personal digital assistant, a tablet, a smart watch, or a computer such as a notebook. It is preferred when the mobile device is easily portable, e.g., in particular a mobile phone or a smart watch.

The digital pass can preferably be stored in the mobile device in a mobile wallet application. It can however be stored also in any other suitable application which allows download of information from remote URL and the storage and presentation of digital passes and further contents.

A "mobile wallet" is a mobile software application loaded in the memory of the mobile device or remotely accessed by the mobile device that facilitates storage and presentation of digital passes and their update, optionally by conducting a periodical update check to remote URL.

A "unique URL assigned to the digital pass" is created by the creator and managed by the creator. The data on the URL are stored in the creator. Typically, the unique URL assigned to the digital pass contains the digital pass identification information as part of the URL address.

A "digital pass identification information" or "pass ID" is a unique digital information, such as a number or an alpha-numerical chain, identifying a digital pass. It is unique for the digital pass, and it is never repeated. The components of the system, such as a promoter, a driver, a creator, typically identify the digital pass by its digital pass identification information.

A "logical number" is an identifier assigned for validation of the digital pass by means of a contact of the digital pass with a validator. The logical number can be a number or an alpha-numeric chain or a QR code or a bar code or an information signal readable from the mobile device of the user, or a data transmission from the mobile device to the validator, such as an open wireless transmission. Rights of the user conferred by the digital pass are assigned to the logical number of said digital pass in the memory of the validator or in a database to which the validator has access.

The creator and the promoter typically identify the digital pass based on its identification information. The validator validates the digital pass based on the rights assigned to its logical number. In some embodiments, the logical number can be the same as the Pass ID.

A "trigger" is a means for triggering or starting the provision of the further content after a triggering event occurs. The triggering event is an action which confirms that the digital pass was validated or used, or the user with the digital pass has arrived to a pre-defined location. Typically, the triggering event is a contact of the digital pass with a validator, such as reading of the logical number of the digital pass by a validator. The trigger notifies the driver after the triggering event has occurred, immediately or with a pre-defined delay.

A "validator" is a means such as a device for recognising an individual pass by means of its logical number. The validator may be the trigger, or a component of the trigger, or connected (locally or remotely) to a trigger. The validation may be a triggering event. Based on the triggering event, the trigger notifies the driver and triggers the provision of futher content.

The validator may be an automatic reader of the logical number.

A "promoter" is an entity (e.g., a processor or a computer program) equipped with technical means for requesting the creation of the digital pass data package and assigning of a unique URL to the digital pass by the creator; and technical means for promoting the URL for retrieval of the digital pass data package by the mobile device or for promoting the digital pass data package to the mobile device.

The promoter may be, for example, an online shop, a web-based service, or a manual distribution list.

The URL and/or the digital pass data package may be promoted by various means such as a mobile application, an e-mail message, an SMS, a communication software (such as WhatsApp, Hangouts, Skype, etc.), a social network, by presenting a code encoding the URL (such as a QR code) on a webpage or on a screen of an automatic machine or on paper, or by broadcasting the URL information by a beacon located in a certain location. The promoter may also promote the URL for example by means of providing a link directly in the application in which the user has purchased the digital pass.

A "creator" is a server or a web service which is adapted to create data packages comprising the digital pass or further content, to assign an identification information to the digital pass, to assign and create a unique URL assigned to the digital pass. The creator hosts the URLs assigned to the digital passes created by the said creator.

A "URL" is an uniform resource locator (sometimes referred to as a web address) which is a reference to a web resource specifying its location or a computer network and a mechanism for retrieving it.

A "driver" is an entity equipped with technical means for generating one or more requests to the creator to create one or multiple further content data packages comprising further content for the digital pass and for providing the creator with the further content. The driver provides the creator with the further content and requests the creation of further content data package(s) upon being triggered by the trigger.

The driver can, for example, be a CRM (customer relation management) system triggering a communication campaign onto the digital passes by selecting a predefined further information content and sending it to the creator where it is converted into a further content data package.

The driver is an automated system with a memory storing a pre-defined further content which is conditional upon triggering events. Being "conditional upon" should be understood as triggering events or combinations thereof triggering the provision of the further contents, and/or the identification data of the digital pass or the logical number of the digital pass influencing selection of the further content to be provided after the triggering event occurs. Typically, pre-defined further content is saved in the memory of the driver or in a database to which the driver has access together with information about the triggering event or the digital pass identification data or the logical number which shall cause the provision of said further content.

In some embodiments, the driver receives the information that the unique URL assigned to the digital pass was provided to the mobile device and the digital pass data package was retrieved by the mobile device.

When a singular of a noun is used in this text, such as "a driver", "a trigger", it means at least one component of the type is present. However, one or more components of the type may be present.

The further content typically depends on the triggering event. In some embodiments, several triggering events are available for a single digital pass (e.g., interaction with several location-based triggers or with several different validators), and the further content provided then depends on (is conditional upon) which trigger is triggered. The further content may be provided immediately after the triggering event or within a pre-defined period after the triggering event, or at a pre-defined time, provided that the triggering event has occurred. The further content may be a provision of a single information (single new data package) or a plurality of data packages, typically provided at several different points in time.

The further content may be an image, a text, a logical number in a form readable by a person, or in a form of a bar code, a QR code, or in a form readable by bluetooth or NFC frequency communication.

For example, the digital pass may represent a digital ticket to a sports or cultural event, and the further content may involve informative content about the sports and cultural event such as relating to the course of the event, the updates on the program, special events within the sports and cultural event, etc. The triggering event may be, for example, reading and successful validation of the digital ticket at an entrance gate whereas this information is shared with and stored at the driver which may be a remote controlling server.

In another example, the digital pass may be a digital ticket for access to a location (e.g., museum) or event, the triggering event may be reading and successful validation of the digital ticket at an entrance gate, and the further content may involve rights of access or at least one discount voucher for access to another location or event. In practical terms, the digital ticket may turn into another digital ticket in the user's mobile device without requiring any action from the user.

In yet another example, the digital pass may be a digital ticket for access to several locations (e.g., several museums), and the triggering event may be reading and successful validation of the digital ticket at an entrance gate of one location (e.g., one of the museums), the further content is conditional on the specific validator in which the digital ticket was validated, and a first further content provided immediately after the validation may be the plan of the relevant location (e.g., museum) into which the user just entered, and a second further content is provided after an average time which a visitor spends in the said location (e.g., museum), and this further content may contain teasers to the locations (e.g., other museums) which the user did not yet visit.

In another example, the digital pass may be a digital ticket for access to a location (e.g., museum) or event, the triggering event may be reading and successful validation of the digital ticket at the entrance gate or a point of time, and the further content may involve a voucher that entitles the holder to a discount, or that may be exchanged for goods or services.

The driver, promoter, trigger and optionally also the mobile device can in some instances be in any combination jointly embodied in the same technical means, for example in a CRM software with enhanced capability to distribute digital passes to holders according to a pre-defined key.

The challenge to the mobile device to upload the specific URL for the digital pass occurs on every update of the specific URL with further content and/or periodically in pre-determined time intervals. The challenge may be carried out by remote communication means.

The download of the further content (i.e., the automatic update of the digital pass) may in some embodiments be notified to the user by a lockscreen notification.

The present invention thus allows to use a digital pass for providing the user with content such as advertising or informational content. The digital pass does not disappear from the mobile device memory or from the relevant mobile application after being used, and instead turns into a means for providing a further content. It is advantageous that the user does not have to take any actions to access this further content, thus it is not necessary to inform the user about the need to take any actions or access further websites or mobile device applications.

Due to the system and method of the present invention, after the triggering event occurs, e.g., digital ticket has been validated, one or a series of content updates follows, aiming to broadcast information, for example information about the sports event, promotion of the event partner or change of the digital ticket visual accompanied by notifications. The present invention provides increased and user-friendly possibilities of changing the used ticket into an active channel of customer communication. At a pre-determined moment after the triggering event occurs, the ticket can turn into e.g. a voucher, a promotional leaflet, a discount voucher or an event organiser's information card.

The invention may be embodied in the form of software-hardware systems, or in a software as a service (SAAS) mode.

In one embodiment, the process is performed as follows:
1. The promoter requests the creation of URL and digital pass (including the digital pass data package and digital pass identification information) from the creator.
2. The creator creates the digital pass and generates the unique URL for its retrieval.
3. The creator sends the URL to the promoter.
4. The promoter promotes (e.g, forwards) the URL to the user's mobile device.
5. The mobile device, for example its mobile application Wallet, reads the URL and retrieves the digital pass data package from the creator.
6. The digital pass data package is saved in the mobile device, e.g., in the Wallet application.
7. The mobile device provides a feedback to the promoter and/or creator, confirming that the digital pass data package was received.
8. The driver receives from the promoter an information about the digital pass identification information as created by the creator.
9. The driver stores the information related to the further content and about the triggering event(s) to trigger its provision, optionally also information about the user.
10. The logical number which is part of the digital pass data package is passed and registered to a trigger and/or validator. The logical number can be assigned by the promoter or by the creator.
11. The digital pass is displayed in the mobile device and presented so that reading of the logical number can be done, e.g., by the validator. The reading of the logical number is a triggering event.
12. The information that the logical number was read is passed by the trigger to the driver.
13. Triggered by the fact that the logical number was validated, the driver sends the further content corresponding to the triggering event to the creator and requests from the creator the creation of a further content data package.
14. The creator creates and uploads the further content data package on the unique URL assigned to the said digital pass.
15. The mobile device, e.g., the Wallet application, is challenged by the creator to retrieve the further content data package from the unique URL assigned to the said digital pass.
16. The further content replaces the digital pass or the previous further content.

### Brief description of figures

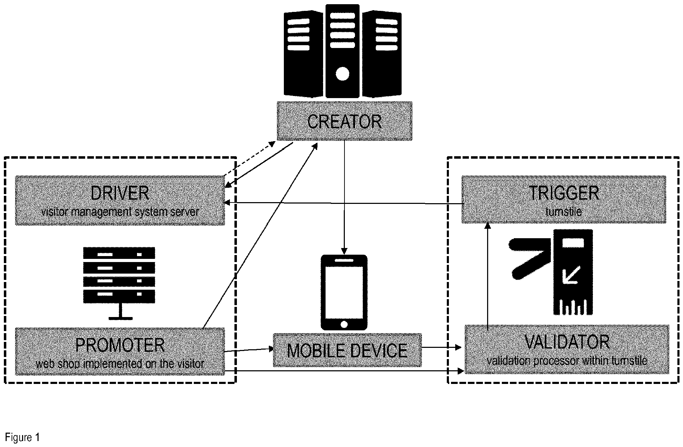

Figure 1 shows an embodiment of the system useful in Example 1.

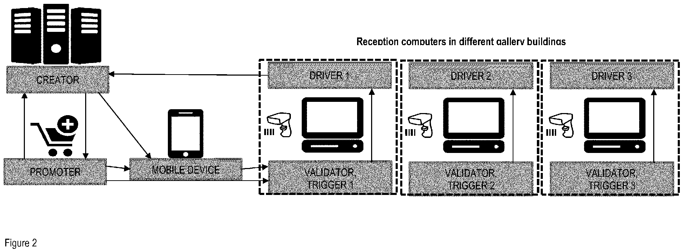

Figure 2 shows an embodiment of the system useful in Example 2.

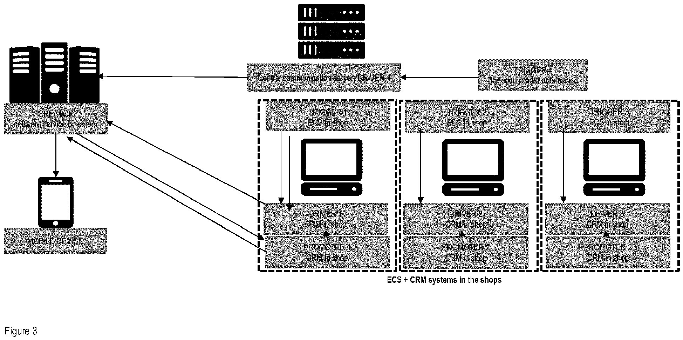

Figure 3 shows an embodiment of the system useful in Example 3.

### Examples of carrying out the invention

### Example 1:

The user uses a web browser of his smart mobile phone to purchase a ticket for a ZOO in its web-shop which is an integrated client module (Promoter) of a visitor control system (Driver). The web-shop requests from a remote server (Creator) a service consisting in creation of a new digital pass with a defined ticket content. The creation of the digital pass involves the creation of a unique URL assigned to the digital pass and the creation of digital pass data package comprising the defined ticket content. Following provision of the assigned URL address by the Creator to the web-shop the web-shop sends (promotes) it to the visitor's email along with a confirmation of the successful purchase and payment. The web-shop also passes the information about the pass ID provided and its bar code to a Validator computer, where it is listed in a validation ledger. The visitor opens the email in his phone and activates the link associated with the URL address. The phone retrieves the digital pass from the URL on the Creator. (Optionally, after the pass is downloaded to the phone and stored in the Wallet by the user, the Creator shares this information with the Driver upon query of the Driver). The bar code on the face of the card is presented to a scanner attached to a turnstile and verified against the validation ledger by the validation processor within the turnstile (Validator, Trigger). The user is granted access to the ZOO and passes the turnstile. The Turnstile passes the information about successful validation and passage of the user and his specific pass ID to the Driver. The Driver receives the information about the successful validation of a specific pass ID and initiates a 60 seconds countdown (delay) followed by immediate request to a Creator to create a further content for the pass ID under its URL and provides the Creator with the further content information. The Creator creates a further content data package ready for download specifically for the user's pass ID under its URL and remotely challenges the Wallet in the user's mobile phone to perform update of the pass. The Wallet reaches to the assigned URL address on the Creator server and retrieves the further content data package to replace the digital pass content, producing an information card displaying a welcome message. Due to this procedure, the user walks through the entrance and exactly in 60 seconds following the validation he receives a notification from the ticket with a welcome message displayed on his ticket and at the same time his ticket turns into a ZOO Information Card. The Creator replaces the content represented in the user's card with the further contents contained in further content data packages by challenging again the Wallet to upload the further content data packages from the unique URL. The wallet responds by download and replacement of the old content with the further content. The visitor may receive a notification from his phone (e.g., on the lockscreen) to look at the information card and read the new update. The further content can be directed to only specific passes, or to all passes validated on the relevant day, or to all passes fulfilling another condition. At closing time of the ZOO, by means of Driver requesting from Creator update of all passes issued on that day in all Wallets, however without a notification, all tickets are changed to a discount voucher. Although already at home, the user's ticket may still notify him about various spectacles he missed after he left the ZOO and eventually change to a discount voucher for a partnering botanical garden.

### Example 2:

The user purchases an online ticket for a gallery that encompasses several buildings across the town. He receives the ticket and stores it in the Wallet in the same way as in the previous example. After a ticket creation is requested by the Promoter from the Creator, the digital pass is Created, and its URL is provided by Creator back to the Promoter and then emailed by the Promoter to the user's email. After activating the URL address link by the user, the ticket is retrieved by the user's phone and placed to the Wallet with a specific pass ID, the pass ID is listed by the Promoter in a validation ledger next to the ticket's code and made available to all reception computers. When the code (logical number) of ticket is presented to the scanner, the reception computer compares its code with the validation ledger. In every building the user presents his ticket to a receptionist who scans the code by a scanner connected to a reception computer (acting as a Validator, a Trigger and a Driver). The reception computers are interconnected and share information. After granting an access, the reception computer sends a request to the Creator to update the pass content under its URL with a pre-defined further content containing relevant information regarding the exposition in the building and to challenge the Wallet to download it. The ticket in the Wallet is thus updated with a content regarding the exposition in the building.

Upon leaving the building, the ticket code can be read again by the scanner connected to the reception computer and this triggering event causes the Driver to request a creation of further content data package from the Creator, wherein the further content comprises the list of buildings of the gallery which the user did not visit yet and information about how to reach these buildings, starting from the building which the user is currently leaving. The Creator creates the further content data package, uploads it to the URL assigned to the user's ticket (based on its pass ID), and challenges the mobile phone to reach to the URL and download the available information.

### Example 3:

After registration in a partner shop of a Benefit Program (loyalty program), a user receives a personalised email with a URL for a download of the digital Benefit card which entitles its user to a discount in the whole shopping mall that runs the Benefit Program. Any time the user enters the shopping mall, he has the possibility to get his Benefit card read by a bar code reader. As soon as this is done, the card provides an up-to-date information about the current discount offers for the card holders in the Benefit partner shops. Presenting the card in selected shops at checkout qualifies the user for a discount not only for the checked goods, the card further turns to a discount voucher to a partnering restaurant. From the technical perspective, the cards are promoted by means of a CRM system (Promoter) that registers clients of the shop and distributes emails with URL for a card download. When a client of the partner shop registers for the Benefit Program for the first time at checkout in the shop, the shop's CRM (Promoter) sends a request for creation of a digital pass accompanied with the digital pass content to a remote Creator server. The Creator server creates a digital pass data package with the required content, including its unique pass ID, and provides the Promoter with URL for retrieval of the digital pass data package. The URL is attached to an email sent by the CRM to the user and the CRM further keeps record of this digital pass (based on its pass ID). Upon activating the link delivered to the mobile device, the data package is retrieved by the mobile device from the Creator and executed, producing a Benefit card represented visually as a two-sided card. When the user gets the card read by a bar code reader (Trigger) at his entering the mall, the information is transmitted to a central communication server (Driver) which contains a pre-loaded actualised campaign content for the day. The central communication server sends to the Creator a request to create a further content data package containing the campaign content for the day and requests the Creator to upload the further content data package to the URL corresponding to each digital pass read by the bar code reader on that day immediately upon the reading of the bar code (logical information) of the relevant digital pass (Benefit card). The Creator creates the requested further content data package, uploads it to the unique URL of the relevant digital pass (Benefit card) and challenges the relevant mobile device to download the content from the unique URL. Thus, the Benefit card is updated with a new content including an up-to-date information on the discounts in the Benefit partner shops. Later, when the user presents his Benefit card to claim the discount in a partner shop at checkout, the electronic cash system module (Trigger and Driver) in the shop's system issues another request to Creator to create a new further content data package comprising a discount voucher in the partnering restaurant. The Creator creates the requested further content data package, uploads it to the unique URL of the relevant digital pass (Benefit card) and challenges the relevant mobile device to download the content from the unique URL. Thus, the user receives on his Benefit card the discount voucher to the partnering restaurant.

## Claims

1. A system for digital pass transactions which contains at least
- a promoter equipped with technical means to request from a creator a digital pass data package creation and a digital pass identification information generation, and with technical means to promote a unique URL assigned to the digital pass for retrieval of the digital pass and of further content to be displayed in the digital pass by a mobile device of a user,
- a creator which is a server or web-based service for creating a digital pass data package and for creating a further content data package; wherein the creator is equipped with technical means to send the unique URL assigned to the digital pass to the promoter;
- a trigger for triggering the automatic provision of the further content to the unique URL assigned to the digital pass after the triggering event occurs,
- a driver equipped with technical means for providing the creator with the further content to be displayed in the digital pass when triggered by the trigger, and for requesting the creator to create a further content data package and upload it to the unique URL assigned to the digital pass,
- whereas the creator or the promoter or the driver are adapted to challenge the mobile device to re-load the further content data package from the unique URL assigned to the digital pass at least on every update of the unique URL assigned to the digital pass with the further content data package.

2. The system according to claim 1, wherein the digital pass is visually represented in a mobile application in the mobile device in the form of a double-sided card with a textual and graphical content, preferably the mobile application is a mobile wallet.

3. The system according to claim 1 or 2, wherein the further content is a pre-defined content to be provided to the user after the triggering event occurs, and the said pre-defined further content is stored in the memory of the driver, together with the definition of the triggering event or a sequence of triggering events which shall trigger the provision of the further content, and optionally together with the information about time delay from the triggering event(s) after which the further content shall be provided.

4. The system according to claim 1 or 2 or 3, wherein the promoter, the trigger, the driver and the creator may be separate components or separate computer programs, or may be integrated into one to three components, e.g., processors or computer programs.

5. A method for digital pass transactions according to the present invention comprises at least the following steps:
- a promoter sends a request to a creator to create a digital pass data package;
- the creator creates a digital pass data package and generates a digital pass identification information and a unique URL assigned to the digital pass,
- the creator sends at least the unique URL assigned to the digital pass to the promoter; - the promoter provides the unique URL assigned to the digital pass and/or the digital pass data package to a mobile device of the user; the mobile device downloads the digital pass data package from the unique URL assigned to the digital pass or from the message from the promoter;
- a driver receives the information that the unique URL assigned to the digital pass and the digital pass data package were retrieved by the mobile device;
- after a triggering event occurs, the trigger triggers the automatic provision of the further content to the unique URL assigned to the digital pass by a driver;
- after being triggered by the trigger, the driver sends a pre-defined further content to the creator in at least one pre-defined time interval, and for each further content the driver requests the creator to create the further content data package,
- the creator upon the request from the driver and upon provision of the further content by the driver creates the further content data package and uploads it to the specific URL of the digital pass,
- the creator, the driver or the promoter challenge the mobile device to re-load the URL, thus uploading the further content data package.

6. The method according to claim 5, wherein the creator sends to the promoter the unique URL assigned to the digital pass and at least one of the digital pass data package and the digital pass identification information.

7. The method according to claim 5 or 6, wherein the URL is promoted by means of a mobile application, an e-mail message, an SMS, a communication software, a social network, by presenting a code encoding the URL such as a QR code on a webpage or on a screen of an automatic machine or on paper, or by broadcasting the URL information by a beacon

8. The method according to any one of claims 5 to 7, wherein the digital pass data package is uploaded by the creator to the unique URL assigned to the digital pass and it is then downloaded by the mobile device from the URL which is provided to the mobile device by the promoter.

9. The method according to any one of claims 5 to 8, wherein the triggering event is a contact of the digital pass with a validator, such as reading of a logical number of the digital pass by a validator.

10. The method according to any one of claims 5 to 9, wherein wherein the further content is provided in a single step or in multiple steps, each step involving provision of a new further content data package.

11. The method according to claim 5, comprising at least the following steps
a. the promoter requests the creation of URL and digital pass, including the digital pass data package and digital pass identification information, from the creator;
b. the creator creates the digital pass and generates the unique URL for its retrieval;
c. the creator sends the URL to the promoter;
d. the promoter promotes the URL to the user's mobile device;
e. the mobile device, preferably its mobile application Wallet, opens the URL and retrieves the digital pass data package from the creator;
f. the digital pass data package is saved in the mobile device, preferably in the Wallet;
g. the mobile device provides a feedback to the promoter and/or creator, confirming that the digital pass data package was received;
h. the driver receives from the promoter an information about the digital pass identification information as created by the creator;
i. the driver stores the information related to the further content and about the triggering event(s) to trigger its provision, optionally also information about the user;
j. the logical number which is part of the digital pass data package is passed and registered to a trigger and/or validator;
k. the digital pass is displayed in the mobile device and presented so that reading of the logical number can be done, preferably by the validator, whereas the reading of the logical number is a triggering event;
l. the information that the logical number was read is passed by the trigger to the driver;
m. triggered by the fact that the logical number was validated, the driver sends the further content corresponding to the triggering event to the creator and requests from the creator the creation of a further content data package;
n. the creator creates and uploads the further content data package on the unique URL assigned to the said digital pass;
o. the mobile device, preferably the Wallet application, is challenged by the creator to retrieve the further content data package from the unique URL assigned to the said digital pass;
p. the further content replaces the digital pass or the previous further content.
